## Europäisches Patentamt

## European Patent Office

## Office européen des brevets

(19)

(11) Veröffentlichungsnummer: **0 068 221**
**B1**

(12) **EUROPÄISCHE PATENTSCHRIFT**

(45) Veröffentlichungstag der Patentschrift:
02.10.85

(51) Int. Cl.⁴: **A 23 G 1/02**

(21) Anmeldenummer: 82105102.6

(22) Anmeldetag: 11.06.82

(54) Verfahren und Vorrichtung zum Behandeln von ungeschälten Schalenfrüchten, insbesondere von Kakaobohnen.

(30) Priorität: 24.06.81 CH 4170/81

(43) Veröffentlichungstag der Anmeldung:
05.01.83 Patentblatt 83/1

(45) Bekanntmachung des Hinweises auf die Patenterteilung:
02.10.85 Patentblatt 85/40

(84) Benannte Vertragsstaaten:
CH DE FR GB IT LI NL

(56) Entgegenhaltungen:
EP - A - 0 066 897
BE - A - 674 407
DE - C - 469 526
FR - A - 448 682
FR - A - 800 615
FR - A - 1 388 511
US - A - 2 278 471
US - A - 2 278 483
US - A - 2 428 802

(73) Patentinhaber: Gebrüder Bühler AG, CH-9240 Uzwil (CH)

(72) Erfinder: Thaler, Anton, Flurstrasse 5,
CH-9242 Oberuzwil (CH)

BUNDESDRUCKEREI BERLIN

## Beschreibung

Die Erfindung betrifft ein Verfahren zum Behandeln ungeschälter Schalenfrüchte, vorzugsweise von Bohnen oder Nüsse, insbesondere von Kakaobohnen, ausgehend von einer vorbestimmten Feuchtigkeit derselben mit anschließender Wärmebehandlung, sowie eine Vorrichtung zur Ausübung desselben.

Im ungerösteten Zustand haften bei gewissen Bohnen und Nüssen, wie bei Kakaobohnen verschiedener Qualität, die Schalen am Kern derselben, so daß sich diese Früchte nicht wie gewünscht schälen lassen bzw. der Verlust größer ist. Entweder werden die Schälverluste, der Anteil der Kerne oder Kernteile, welcher mit den Schalen separiert wird, oder der geforderte Aufwand zum Schälen erheblich größer als gewünscht. Bei Kakaobohnen ist es deshalb üblich, diese zuerst zu rösten und nachher die Schalen von den Kernen zu trennen. Da aber die Bohnen im gerösteten Zustand spröde sind, zerfallen sie leicht in kleinere Teile, so daß bei einer darauffolgenden Trennung von Kernen und Schalen wieder Schälverluste, der kleinen Kernteile halber, entstehen oder umgekehrt, daß Schalenteile zum Teil mit Kernen und Kernteilen behaftet sind, die nur unter großem Aufwand getrennt werden können.

Ein weiteres Problem ergibt sich durch die Notwendigkeit, die geschmackliche Qualität hervorzuheben und zu erhalten und die Früchte gegen Schädlingsbefall, insbesondere gegen Bakterien zu schützen.

Nun ist es an sich seit langem allgemein bekannt, Kakaobohnen einer Feuchtigkeits-, gefolgt von einer Wärmebehandlung, auszusetzen, um sie leichter schälbar zu machen, doch haben Versuche gezeigt, daß die Parameter der Behandlungsdauer, der Temperatur und des Feuchtigkeitsgehalts sowohl des Ausgangsmateriales als auch allenfalls des Behandlungsgases recht kritisch sind. Je nach dem Feuchtigkeitsgehalt der Schalenfrüchte sind die Behandlungsparameter zu wählen, wobei bei großer Feuchtigkeitsaufnahme durch die Kerne die Gefahr des Bakterienbefalles und ihrer Vermehrung steigt. Andererseits ist bei der Wärmebehandlung zu berücksichtigen, daß mit steigender Temperatur und längerer Behandlungsdauer, die in den Kernen enthaltenen Fette stärker oxidieren und so eine unerwünschte Geschmacksveränderung entsteht, wogegen bei zu geringer Temperatur bzw. zu kurzer Behandlungsdauer eine vollständige Abtötung schädlicher Keime nicht gesichert ist.

Es ist auch ein Verfahren bekannt (vgl. DE-A-2 831 073), bei welchem Kakaobohnen lediglich einer Wärmebehandlung mit Infrarotstrahlen ausgesetzt werden, um den Bakteriengehalt der Bohnen zu reduzieren und eine nachherige Schälung der Kakaobohnen dadurch zu erleichtern, daß die Schalen sich durch die Wärmeeinwirkung besser lösen. Dabei werden die Kakaobohnen während einer vorbestimmten Zeit mit IR-Strahlen behandelt und müssen anschließend gekühlt werden, weil es zu Verkohlungen und zu Glimmfunkenbildung kommt, insb. der Fruchtpulpe bzw. der brennbaren Verunreinigungen. Einerseits wird dadurch wertvolle Energie vernichtet, was das Verfahren verteuert, andererseits ist klar, daß infolge von Verkohlungen, Geschmacks- oder Qualitätsbeeinträchtigungen nicht auszuschließen sind.

Die FR-A-1 388 511 beschreibt ein Verfahren, bei dem es um eine Tiefenwirkung einer Feuchtigkeitsbehandlung mit anschließender Hitzeeinwirkung in einem Hochfrequenzfeld geht. Dabei erfolgt die Behandlung so stark, daß im Kern Kapillarien aufgebrochen werden, um daraus die Wasserreserven des Kernes zur Ablösung der Schale heranzuziehen. Dies bedingt eine starke Veränderung bzw. Verschlechterung der Kernqualität.

Das gleiche gilt im wesentlichen für die beiden US-A-2 278 471 und 2 278 483, die ebenfalls eine wenig schonende Behandlung vorschlagen. So dient das Verfahren nach der US-A-2 278 471 teilweise zur Entfernung von Kakaofett, zu welchem Zwecke Kakaokernbruch »explodiert«. Auch ist es ohne weiteres verständlich, daß bei den in der US-A-2 428 802 angegebenen Behandlungstemperaturen von bis zu 1300°F (704,4°C) weder eine Oxidation zu vermeiden ist, noch eine entsprechende Qualitätseinbuße. Dies gilt insbesondere im Hinblick darauf, daß die Heißgasbehandlung nach dieser Literaturstelle aufgrund der Länge des Behandlungszylinders relativ lange vorgenommen wird. Ebenso sollen nach der US-A-2 278 483 die Kerne so intensiv behandelt werden, daß sich teilweise eine Dextrinierung ergibt.

Dagegen geht es bei der DE-A-469 526 praktisch überhaupt nur um eine Trocknung mittels erhitztem Gas oder Dampf, ohne daß die Feuchtigkeit des Materials berücksichtigt oder beeinflußt würde. Die darin enthaltenen Vorschläge können auch bloß von theoretischer Bedeutung sein, weil mit einer Einwirkzeit von 15 Sekunden und einer Temperatur von etwas mehr als 100°C eine Bakterienabtötung praktisch nicht erreichbar ist.

Der Erfindung liegt die Aufgabe zugrunde, die Rentabilität, d. h. bei geringerem Energieverbrauch die Schälbarkeit — und in diesem Zusammenhang die Ausbeute — zu verbessern und dabei die Qualität, auch hinsichtlich eines geringen Bakteriengehaltes, zu erhöhen. Dies gelingt erfindungsgemäß bei entsprechender Wahl der obenerwähnten Parameter dadurch, daß zuerst die Schalenfrüchte auf eine Feuchtigkeit der Schalen von 10—50 Gew.-% und der Kerne von 2,5—8 Gew.-% belassen bzw. gegebenenfalls zur Erreichung dieser Feuchtigkeit behandelt werden, und daß durch die darauffolgende Wärmebehandlung, die Schalen der Früchte bis auf eine Restfeuchtigkeit der Schalen von 3—10 Gew.-% und der Kerne von 1—8 Gew.-% getrocknet werden.

Behält man diese Werte im Auge, so zeigt sich, daß sich einerseits die Schalen leicht entfernen lassen und so die Ausbeute bei geringem Energieverbrauch sehr hoch ist, andererseits aber auch eine ausgezeichnete Qualität erzielt wird, weil die großen Unterschiede im Feuchtigkeitsgehalt von Schalen und Kernen vor allem durch kurze Behandlungsdauer gewährleistet sind, in welcher Zeit die Oxydation der in den Kernen enthaltenen Fette kaum nennenswert ist. Es ist ersichtlich, daß auch die Wärmebehandlung auf eine starke Verringerung der Schalenfeuchtigkeit ausgerichtet ist, hingegen nicht ausreicht, um den Kernen allzuviel ihres ursprünglichen Feuchtigkeitsgehaltes zu entziehen. Dies bedeutet, daß die Parameter Temperatur und Behandlungsdauer im Sinne einer blitzartigen Erhitzung gewählt werden müssen, ähnlich wie dies bei Milch und ähnlichen Produkten bekanntermaßen zu einer wirksamen Abtötung der Keime führt. Zu einer Rißbildung im Kern, wie bei der FR-A-1 388 511, kann es schon deshalb nicht kommen, weil bei der relativ geringen Feuchtigkeit der Kerne im Laufe der Wärmebehandlung keine Dämpfe entstehen, die zu einem Aufreißen führen könnten, vielmehr erhalten die Schalen selbst das zu ihrem Ablösen nötige Wasser.

Es hat sich gezeigt, daß gute Ergebnisse insbesondere dann erhalten werden, wenn die Wärmebehandlung nur 60—480 s dauert und vorzugsweise die Temperatur wenigstens 150°C beträgt, insbesondere zwischen 150° und 220°C liegt, und daß die Wärmebehandlung zweckmäßig in einer Wirbelschicht, insbesondere in heißer Luft, erfolgt. Zwar ist die Verwendung einer Wirbelschicht in ähnlichem Zusammenhang aus der DE-A-2 354 617 bekanntgeworden, doch war es bisher verborgen geblieben, daß es bei der Bestimmung der Behandlungsparameter auf die Feuchtigkeitsunterschiede bei Schale und Kern ankommt.

Wenn es auch möglich ist, daß die Schalenfrüchte vor der Wärmebehandlung bereits die erwähnten Feuchtigkeitsgehalte besitzen, so ist es doch im allgemeinen vorteilhaft, wenn der Wärmebehandlung eine Feuchtigkeitsbehandlung mit 10—60 s vorangeht, wobei insbesondere die Wasserdampftemperatur wenigstens 120"C, bevorzugt 120°—150°, bzw. die Heißwassertemperatur 40°—90°C beträgt, welch letzterem gegebenenfalls ein Geschmackskorrigens beigemischt ist. Bevorzugt wird hierfür Pottasche verwendet.

Besonders günstig ist es, die weitere Behandlung so vorzunehmen, daß das warme Produkt nach der Wärmebehandlung geschält, vorzugsweise prallgeschält wird, und zweckmäßig die Schalen entfernt werden. Dadurch wird im Gegensatz zu bekannten Verfahren das Schälen am warmen Produkt vorgenommen, wenn also die Schale elastisch ist und sich ohne Mitnahme größerer Kernteile abtrennen läßt. Das Schälen kann durch Prallschälen vorgenommen werden, doch ermöglicht gerade die Elastizität der Kerne des warmen Produktes eine besonders schonende Behandlung mittels Gummiwalzen.

Nach der Wärmebehandlung, insbesondere im Wirbelschichtverfahren, die so vorgenommen werden kann, daß kein wesentlicher Rösteffekt entsteht, trägt das Produkt einen Teil der Wärmeenergie mit sich. Das gleiche gilt, wenn dabei auch leicht geröstet wird. Müßte anschließend wegen der Glimmfunkengefahr gekühlt werden, so ginge — wie erwähnt — dieser Energieanteil verloren. Durch die erfindungsgemäße Bemessung der Restfeuchtigkeit ist gesichert, daß eine Kühlung nicht erforderlich ist, weshalb zur Energieeinsparung vorgeschlagen wird, daß das warme und vorzugsweise geschälte Produkt danach geröstet wird.

Offenkundig eine Energieersparnis bringt es auch, wenn zum Rösten dem Produkt zumindest zum Teil Heißgas, insbesondere Heißluft, aus der Wärmebehandlungsstufe und/oder umgekehrt, der Wärmebehandlungsstufe von der Röststufe, gegebenenfalls über eine Wärmetauschstufe, zugeführt wird. Dies ist jedoch nicht der einzige Vorteil, denn es hat sich überraschend gezeigt, daß damit auch eine deutliche Geschmacksverbesserung verbunden ist, und zwar gleichgültig, ob die Wärmebehandlung bzw. das Rösten mit Inertgas oder mit Luft vorgenommen wird. Über die Ursache ist lange gerätselt worden, doch dürfte sie darin zu suchen sein, daß speziell die Heißluft im ersten Behandlungsschritt einen Teil ihres Sauerstoffgehaltes verliert und so eine Fettoxydation durch Wiederverwendung der sauerstoffärmeren Luft weitgehend hintangehalten werden kann. Aus denselben Grunde ist es aber auch günstig, wenn für die Wärmebehandlung die benötigte Wärme durch Verbrennung, insbesondere von Gas, erzeugt wird. Die Heißluft hat insbesondere eine Temperatur von 120°—170°C.

Zur Durchführung des Verfahrens ist eine erfindungsgemäße Vorrichtung so ausgebildet, daß — vorzugsweise nach einem Netzapparat (1) — ein, insbesondere mit einem Kettenförderer (13) zur gleichmäßigen Produktförderung versehener, Wirbelschichtapparat (8) vorgesehen ist, dessen zugeordnete Heizeinrichtung für eine Temperatur von wenigstens 150° ausgelegt ist und dessen Ausgang mit einer Schälstufe (22) verbunden ist.

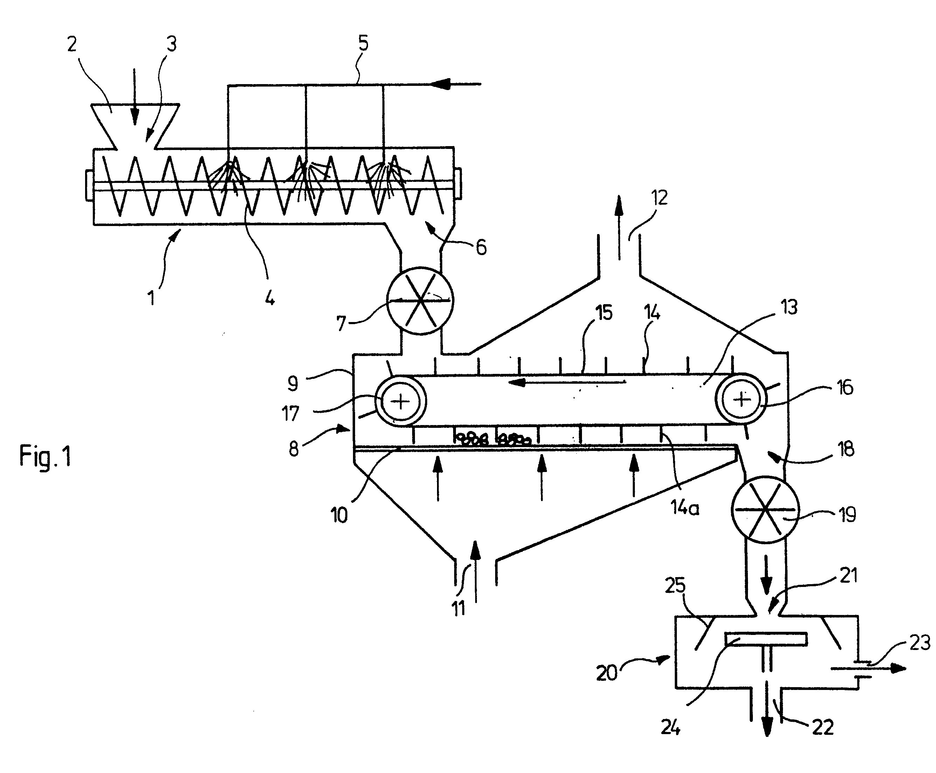

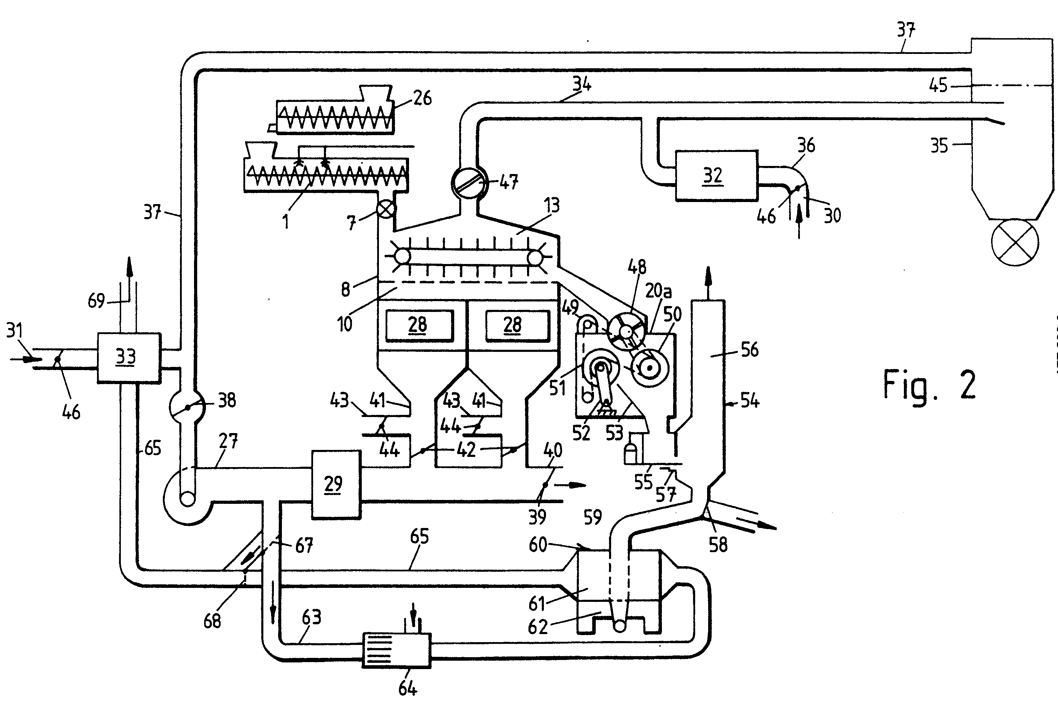

Weitere Einzelheiten der Erfindung ergeben sich aus der nachfolgenden Beschreibung von in Fig. 1 und 2 der Zeichnung schematisch dargestellten Ausführungsbeispielen, an Hand derer die erfindungsgemäße Behandlung von Kakaobohnen beispielhalber erläutert wird.

Handelsübliche Kakaobohnen werden einem Trichter (2) und somit der Einlauföffnung (3) eines Netzapparates (1) zugeführt. Der Netzapparat (1) besitzt eine Förderschnecke (4), die die Bohnen durch eine Befeuchtungszone transportiert und mit Feuchtigkeit vermischt, welcher Zone Feuchtigkeit in Form von Wasserdampf oder Heißwasser über eine Befeuchtungseinrichtung (5) zugeleitet wird. Der Wasserdampf hat eine Temperatur von wenigstens 120°C, z. B. 120—150°C, und wird in den meisten Anwendungsfällen als Befeuchtungsmedium bevorzugt sein. Gerade aber dann, wenn eine zusätzliche, insbesondere geschmacksverbessernde Behandlung, etwa mit einem Geschmackskorrigens wie Pottasche, erwünscht ist, empfiehlt sich die Anwendung von Heißwasser mit 40°—90°C, dem das Behandlungsmedium beigemischt werden kann. Die Fördergeschwindigkeit der Schnecke (4) ist so eingestellt, daß sich je nach Ausgangsfeuchtigkeit der Bohne und Behandlungstemperatur, eine Befeuchtungsdauer unterhalb 180 s, vorzugsweise von 10—60 s, ergibt, um so die Feuchtigkeit der Schalen auf 10—50 Gew.-% und die der Kerne auf 2,5—8 Gew.-% zu bringen, was leicht an der Auslauföffnung (6) des Netzapparates (1) vor einer Zellenradschleuse (7) nachgemessen und gegebenenfalls der eine oder andere Parameter nachgestellt werden kann.

Je höher die Wassertemperatur, desto schneller diffundiert das Wasser in die Schalen und durch die Kerne der Kakaobohnen. Eine hohe Wassertemperatur an der anderen Seite bedingt einen größeren Aufwand von thermischer Energie. Je länger die Aufenthaltszeit der Bohnen im Netzapparat, desto tiefer kann das Wasser in die Bohnen diffundieren. Es ist wünschenswert, daß die Schalen der Bohnen möglichst mit Wasser gesättigt werden, ohne daß die Feuchtigkeit der Kerne erheblich zunimmt, damit bei der darauffolgenden Trocknung die Schalen möglichst viel gegenüber den Kernen expandiert und nicht mehr anhaftet. Handelsübliche Kakaobohnen mit einer Feuchtigkeit von etwa 7—8 Gew.-% (total), oder 10—20 Gew.-% (Schale) und 2,5—5 Gew.-% (Kern) werden im Netzapparat auf die obenerwähnten Feuchtigkeitswerte gebracht. Die Kakaobohnen passieren die Schleuse (7) und gelangen in einen Wirbelschichtapparat (8), bestehend aus einem Gehäuse (9), einem gelochten Boden (10), Zufuhr- bzw. Abfuhröffnungen (11 bzw. 12) für das die Wirbelschicht erzeugende Gas, das zur Vermeidung von Fettoxydationen Inertgas sein kann, im allgemeinen aber Luft ist. Innerhalb des Wirbelschichtapparates (8) ist vorzugsweise ein mechanischer Hilfsförderer (13) vorgesehen, um zu sichern, daß die Aufenthaltszeiten der einzelnen Bohnen in der Wirbelschicht gleich werden. In einer anderen Variante des Verfahrens kann das Produkt in der Wirbelschicht auf ein als Hilfsförderer wirksames, gelochtes schüttelndes, gegenüber der horizontalen Ebene eventuell geneigtes Brett gefördert werden.

Der Hilfsförderer (13) ist vorteilhaft in Form eines Kettenförderers verwirklicht, mit sich am Obertrum einer geschlossenen Kette (15) befindenden Fördergliedern (14) und am Untertrum angeordneten Fördergliedern (14a), die über drehbare Rollen (16 und 17) antreibbar sind und die Bohnen einer Auslauföffnung (18) zuführen.

Zunächst aber fallen die Kakaobohnen nach ihrem Eintritt in den Wirbelschichtapparat (8) gegen den gelochten Boden (10), werden jedoch wegen des entgegen der Schwerkraft wirkenden Gasdruckes der Luftströmung durch den Wirbelschichtapparat hochgerissen und verwirbelt, so daß die heiße Luft die Bohnenoberfläche von allen Seiten umspült (Fluidisation). Die Rollen (16, 17) des Kettenförderers (13) rotieren in der gleichen Richtung derart, daß sich die geschlossene Kette (15) in Richtung des Pfeiles der Fig. 1 bewegt. Die Förderelemente (14a) am Untertrum der Kette (15) reichen bis zum gelochten Boden (10), von einem im Vergleich zu den Ausmaßen von Kakaobohnen kleinem Spiel abgesehen. Die Höhe der Förderelemente (14, 14a) ist anderseits vorzugsweise so groß, daß die vom Luftstrom emporgerissenen Kakaobohnen trotzdem nicht die Förderelemente (14a) überspringen können, wodurch Förderungsgleichmäßigkeiten entstehen können.

Bei der Wärmebehandlung der Kakaobohnen im Wirbelschichtapparat sind folgende Parameter von Bedeutung: Vor allem die Aufenthaltszeit und das Verweilzeitspektrum der Kakaobohnen sowie zweitens die Temperatur und die Strömungsgeschwindigkeit und in zweiter Linie auch die Feuchtigkeit der die Fluidisation erzeugende Luft. Je länger die Aufenthaltszeit der Kakaobohnen, desto trockener werden sie und umgekehrt. Je breiter dabei das Verweilzeitspektrum der Kakaobohnen ist, desto ungleichmäßiger werden sie getrocknet und je höher die Temperatur und die Strömungsgeschwindigkeit und je geringer die Feuchtigkeit der die Fluidisation erzeugende Luft gewählt wird, desto rascher erfolgt die Trocknung, wobei sich dann aber Ungleichmäßigkeiten der Aufenthaltszeit und ein größeres Verweilzeitspektrum stärker auswirken. Es ist wünschenswert, daß die Kakaobohnen gleichmäßig getrocknet werden und noch nicht geröstet werden. Durch diese Wärmebehandlung wird jedenfalls eine vollkommene Abtötung aller schädlichen Keime erreicht. Dabei ist die Zusammenwirkung zwischen obigen Parametern derart vorzusehen, daß nach der Trocknung die Feuchtigkeit der Kakaobohnen 3—10 Gew.-%, vorzugsweise 5—8 Gew.-% (Schale) und 1—8 Gew.-%, vorzugsweise 2—4 Gew.-% (Kern) betragen.

Die Kakaobohnen passieren sodann eine weitere Schleuse (19), um geschält zu werden und gelangen durch eine Zufuhröffnung (21) in einen Schälapparat (20), z. B. in Form eines Prallschälers. Die Kakaobohnen werden darin von einer Schleuder (24) gegen eine Prallwand (25) geschleudert, wobei die Schalen von den Kernen der Kakaobohnen getrennt werden und passieren eine Auslauföffnung (22 bzw. 23). Die Drehzahl der Schleuder (24) ist vorzugsweise mittels einer elektrischen Regelung (Phasenanschnittsteuerung, Bürstenverschiebung od. dgl.) oder vorteilhaft mit Hilfe eines Variatorgetriebes an die durch eine bestimmte Type einer Schalenfrucht gegebenen Erfordernisse anpaßbar. Nach dem Verlassen des Schälapparates (20) können die Bohnen nach Entfernen der Schalen in üblicher Weise weiterbehandelt werden.

Bei der bevorzugten Ausführungsvariante nach Fig. 2 ist dem Netzapparat (1) zur Vergleichmäßigung seiner Beschickung ein Dosierapparat (26) vorgeschaltet. Die Schalenfrüchte gelangen in der anhand der Fig. 1 beschriebenen Weise durch den Netzapparat (1) und die Schleuse (7) zum Wirbelschichtapparat (8). In diesem Wirbelschichtapparat (8) wird Inertgas und/oder Luft mit Hilfe eines Gebläses (27) eingeblasen. Zur Erwärmung dienen dabei entweder Heizeinrichtungen (28) oder — was für fettige und daher gegen eine unerwünschte Oxydation anfällige Schalenfrüchte bevorzugt ist — eine Gasverbrennungseinrichtung (29). An Stelle von Gas können natürlich auch andere Energieträger verbrannt werden, wobei wesentlich ist, daß die Menge an freiem Sauerstoff dadurch verringert wird.

Wird, insbesondere mit Luft, im Durchfluß gearbeitet, so tritt das jeweilige Gas entweder durch einen Einlaufstutzen (30 oder 31) in ein Rohrleitungssystem ein. Jedem dieser Einlaufstutzen (30, 31) ist vorzugsweise ein Wärmetauscher (32 bzw. 33) nachgeschaltet, der jeweils mit Abwärme aus einer beliebigen im Rahmen des Verfahrens verwendeten Wärmequelle betrieben werden kann. Da aber der Einlaufstutzen (30) in eine Abzugsleitung (34) mündet, die unter Umständen Staub und kleinere Bestandteile von den im Wirbelstromapparat (8) behandelten Schalenfrüchten enthält und deshalb einem Filter (35) zugeführt werden muß, ist es günstiger, den Einlaufstutzen (30) mit dem Wärmetauscher (32) samt der dazugehörigen Leitung (36) wegzulassen und bei dieser Betriebsart das Gas bzw. Luft über den Einlaufstutzen (31) zuzuführen, der hinter dem Wärmetauscher (33) mit einer vom Filter (35) kommenden und daher gefilterten Gas enthaltenden Rohrleitung (37) verbunden ist. In dieser Rohrleitung (37) ist zu Regel- bzw. Steuerzwecken eine Drosselklappe (38) vorgesehen. Über diese Drosselklappe (38) und das Gebläse (27) kann dann im Durchlaufbetrieb das jeweilige Gas einem durch eine Klappe (39) verschließbaren Abschlußstutzen (40) zugeführt werden. Es versteht sich, daß bei dieser Betriebsart die Heizung mittels der Gasverbrennungseinrichtung (29) nicht zweckmäßig ist, es sei denn, der Abluftstutzen (40) wäre mit einem Wärmetauscher, z. B. dem Wärmetauscher (33) verbunden. Falls es erwünscht ist, den Wirbelstromapparat (8) über eine Gasverbrennungseinrichtung zu beheizen und dennoch mit Durchluft zu arbeiten, so kann die Gasverbrennungseinrichtung auch in wenigstens einen der beiden zum Wirbelschichtapparat (8) führenden Rohrzweige (41) oder einem hinter der Leitung zum Abluftstutzen (40) gelegenen und sich in die Rohrzweige (41) verästelnden gemeinsamen Rohrzweig angeordnet sein.

An dieser Stelle sei erwähnt, daß weitere Regelungsklappen (42) in den Rohrzweigen (41) vorgesehen sein können, wogegen für eine eventuelle Kühlung mittels Frischluft oder Gas aus am Rohrstutzen (43) angeschlossenen, nicht dargestellten Gasbehältern Absperr- und Regelklappen (44) vorgesehen sein können. Diese Klappen (39, 44) sind in diesem Fall geöffnet, die Klappen (42) geschlossen.

Die Filterstufe (35) ist zweckmäßig von einem Schlauchfilter gebildet, dessen Schläuche in bekannter Weise an einer Trennplatte (45) befestigt sind.

Gemäß der Darstellung in Fig. 2 sind die Einlaufstutzen (30, 31) durch Absperrklappen (46) verschlossen, so daß die Anlage auf Umluftbetrieb eingestellt ist. Dementsprechend wird auch der Abluftstutzen (40) mittels der Klappe (39) verschlossen. In dieser Betriebsart wird das im System befindliche Gas ständig umgewälzt, wobei es vom Gebläse (27) über die Rohrzweige (41) dem Wirbelstromapparat (8) zugeführt wird, wo es durch den gelochten Boden (10) in die eigentliche Behandlungskammer eintritt. Zur Erzeugung einer pulsierenden Gasströmung kann einfach eine Drehklappe (47) ständig angetrieben sein, wodurch die Ausbildung stehender Gasströmungssäulen oder -wege vermieden wird. Nach dem Filtern in der Filterstufe (35) kehrt das gereinigte Gas über die Leitung (37) zum Gebläse (27) wieder zurück.

Am Ausgang des Wirbelstromapparates (8) ist ein Schälapparat (20a) vorgesehen, der im Gegensatz zur Darstellung der Fig. 1 abweichend von dem für Kakaobohnen od. dgl. üblichen Stande der Technik von einem Gummiwalzenschäler gebildet ist, wie er normalerweise für Reis angewandt wird. Der Grund für die Anordnung eines Gummiwalzenschälers (20a) liegt darin, daß bei Durchführung des erfindungsgemäßen Verfahrens mit den angegebenen Feuchtigkeitswerten, die Kerne verhältnismäßig elastisch bleiben, die Schalen aber spröde sind, so daß das Schälen sehr schonend durchgeführt werden kann. Dadurch erhöht sich aber auch die Ausbeute.

Der Gummiwalzenschäler (20a) besitzt an seinem Eingang eine Zellenradschleuse (48), die von einem Motor (49) über ein mit der einen Gummiwalze (50) angeordnetes (nicht dargestelltes) Getrieberad angetrieben wird. Die andere Gummiwalze (51) ist in bekannter Weise an einem Hebel (52) beweglich gelagert.

Nach dem Schälen durch die beiden Gummiwalzen (50, 51) fallen Schalen und Kerne über eine Rutsche (53) und gelangen in einen Windsichter oder Aspirationskanal (54). Dabei fällt das vom Schälapparat (20a) angelieferte Gut in der Weise, wie dies in DE-C-1 481 076 beschrieben ist, auf eine ausbalancierte Vibrationsplatte (55), die für eine gleichmäßige Ausbreitung und Zufuhr des zu sichtenden Materials zum eigentlichen Windkanal (56) sorgt, an dessen Oberseite ein nicht dargestelltes Sauggebläse angeordnet ist, das Luft über eine Öffnung (57) ansaugt. Die leichteren Schalen werden so nach oben abtransportiert, wogegen die schwereren Kerne herabfallen. Dabei fallen bereits 95—99% des Gesamtkerngewichtes (je nach Frucht) an. Die Schalen können sodann zur Nachlese in ein Sieb und zu einem weiteren Windkanal gebracht werden, um im Luftstrom mitgerissene Kernteile auszusieben. Auf diese Weise können Ausbeuten über 99% erzielt werden.

Es ist zweckmäßig, anschließend den Röstvorgang vorzusehen, weil durch die Zufuhr der noch warmen Bohnen an Energie gespart wird. Zu diesem Zwecke ist in der vom Windsichter (24) wegführenden Leitung eine Klappe (58) vorgesehen, die die geschälten Kerne über eine Zweigleitung (59) einem verhältnismäßig kurzen Schachtröster (60) zuführt. Der Schachtröster (60) ist in herkömmlicher Weise ausgeführt und braucht deshalb nicht im einzelnen erläutert werden. Dementsprechend besitzt er in seinem oberen Abschnitt eine Röstzone (61), dem im unteren Abschnitt eine Kühlzone (62) folgt, aus der dann die gerösteten Kerne in nicht dargestellter Weise abgeführt, beispielsweise in Säcke gefüllt werden können.

Der Schachtröster (60) erhält Heißgas bzw. Heißluft über eine Leitung (63), die aus dem Gasumlauf für den Wirbelschichtapparat (8) vor oder hinter der Gasverbrennungseinrichtung (29), abgezweigt ist, sofern eine Trocknung oder eine Röstung bzw. Nachröstung erwünscht ist. Da im Umlaufbetrieb dieses Gas erhitzt ist, tritt es bei Abzweigung in der dargestellten Weise vor der Gasverbrennungseinrichtung (29) mit einer Temperatur zwischen 140° und 160° in die Leitung (63) und von dort in den Schachtröster (60) ein. Erforderlichenfalls kann eine Temperaturregel- und Mischstufe (64) zwischengeschaltet sein. An der anderen Seite des Schachtrösters (60) verläßt ihn das noch heiße Gas und kann beispielsweise über eine Leitung (65) wieder in den Kreislauf gebracht werden, d. h. über den Wärmetauscher (33) dem Gebläse (27) zugeführt werden. Auf diese Weise ist nicht nur eine optimale Energieausnützung gesichert, sondern es hat sich auch ergeben, daß im Zuge des oftmaligen Durchlaufes der freie Sauerstoff immer weiter verringert wird, so daß die in den Schalenfrüchten vorhandenen Fette weniger der Gefahr des Oxydierens ausgesetzt sind und daher in ihrem Geschmack erhalten bleiben.

Die Klappe (58) unterhalb des Windsichters (54) kann aber auch (bezogen auf Fig. 2) im Uhrzeigergegensinne nach links verschwenkt werden, so daß die geschälten Kerne in ihrem noch immer warmen Zustand nicht unmittelbar einem Röster zugeführt werden, sondern einer anderen Behandlung bzw. ungeröstet vorerst in Säcke gefüllt werden.

Im Rahmen der Erfindung sind zahlreiche verschiedene Ausführungsvarianten und -einzelheiten möglich; beispielsweise können die einzelnen Klappen, wie die Klappen 46 und 39 untereinander so verbunden sein, daß ihre gemeinsame Verstellung durch eine einzige Betätigung im gleichen Umschaltsinne möglich ist. Auch ist es denkbar, daß die Aufeinanderfolge einzelner Verfahrensstufen geändert wird, beispielsweise eine Röstung zu einem früheren oder späteren Zeitpunkt des Verfahrens erfolgt. Ferner kann nach dem Schälen noch eine weitere antibakterielle Behandlungsstufe mittels Wärme vorgesehen werden. Falls im Wirbelschichtapparat (8) eine leichte Röstung erfolgen soll, kann das Produkt im Schachtapparat (60) auskühlen gelassen oder sogar gekühlt werden. Für diesen Fall können zwei Klappen (67, 68) zum Umleiten des Strömungsmittels vorgesehen sein. Der Schachtapparat (60) wird dann unmittelbar über die Temperaturregel- und Mischstufe (64) belüftet bzw. begast. Die mit Feuchtigkeit beladene Luft wird zweckmäßig über einen Abluftstutzen (69) abgelassen.

Ferner kann innerhalb des Leitungssystems, insbesondere der Leitung (65), wenigstens ein zusätzliches Gebläse vorgesehen sein.

## Patentansprüche

1. Verfahren zum Behandeln ungeschälter Schalenfrüchte, vorzugsweise Bohnen oder Nüsse, insbesondere von Kakaobohnen, ausgehend von einer vorbestimmten Feuchtigkeit derselben mit anschließender Wärmebehandlung, dadurch gekennzeichnet, daß zuerst die Schalenfrüchte auf einer Feuchtigkeit der Schalen von 10—50 Gew.-% und der Kerne von 2,5—8 Gew.-% belassen bzw. gegebenenfalls zur Erreichung dieser Feuchtigkeit behandelt werden, und daß durch die darauffolgende Wärmebehandlung die Schalen der Früchte bis auf eine Restfeuchtigkeit der Schalen von 3—10 Gew.-% und der Kerne von 1—8 Gew.-% getrocknet werden.

2. Verfahren nach Anspruch 1, dadurch gekennzeichnet, daß die Wärmebehandlung nur 60—480 s dauert und vorzugsweise die Temperatur wenigstens 150°C beträgt, insbesondere zwischen 150°C und 220°C liegt, und daß die Wärmebehandlung zweckmäßig in einer Wirbelschicht, insbesondere in heißer Luft, erfolgt.

3. Verfahren nach Anspruch 1 oder 2, dadurch gekennzeichnet, daß der Wärmebehandlung eine Feuchtigkeitsbehandlung mit Wasserdampf oder Heißwasser von durchschnittlich weniger als 180 s, vorzugsweise 10—60 s, vorangeht, wobei insbesondere die Wasserdampftemperatur wenigstens 120°C, bevorzugt 120°—150°C, bzw. die Heißwassertemperatur 40°—90°C beträgt, welch letzterem gegebenenfalls ein Geschmackskorrigens beigemischt ist.

4. Verfahren nach Anspruch 1, 2 oder 3, dadurch gekennzeichnet, daß das warme Produkt nach der Wärmebehandlung geschält, insbesondere prallgeschält wird, und vorzugsweise anschließend die Schalen entfernt werden.

5. Verfahren nach einem der Ansprüche 1 bis 4, dadurch gekennzeichnet, daß das warme und vorzugsweise geschälte Produkt danach geröstet wird, und daß zweckmäßig zum Rösten dem Produkt zumindest zum Teil Heißgas, insbesondere Heißluft, aus der Wärmebehandlungsstufe und/oder umgekehrt der Wärmebehandlungsstufe von der Röststufe, gegebenenfalls über eine Wärmeaustauschstufe zugeführt wird.

6. Verfahren nach Anspruch 5, dadurch gekennzeichnet, daß das Heißgas eine Temperatur von 120"C—170"C besitzt.

7. Verfahren nach einem der Ansprüche 1 bis 6, dadurch gekennzeichnet, daß für die Wärmebehandlung die benötigte Wärme durch Verbrennung, insbesondere von Gas, erzeugt wird.

8. Vorrichtung zur Durchführung des Verfahrens nach einem der Ansprüche 2 bis 7, dadurch gekennzeichnet, daß — vorzugsweise nach einem Netzapparat (1) — ein mit einem mechanischen Förderer, insbesondere einem Kettenförderer (13) zur gleichmäßigen Produktförderung versehener Wirbelschichtapparat (8) vorgesehen ist, dessen zugeordnete Heizeinrichtung für eine Temperatur von wenigstens 150°C ausgelegt ist und dessen Ausgang mit einer Schälstufe (22) verbunden ist.

9. Vorrichtung nach Anspruch 8, dadurch gekennzeichnet, daß die Schälstufe (22) von einem Prallschäler (20) oder einem Gummiwalzenschäler (20a) gebildet ist.

10. Vorrichtung nach Anspruch 8 oder 9, dadurch gekennzeichnet, daß an die Schälstufe (20a) ein Sichter (54) angeschlossen ist, von dessen Ausgang das Produkt vorzugsweise einem Röstapparat (60) zuführbar ist.

11. Vorrichtung nach Anspruch 8, 9 oder 10, dadurch gekennzeichnet, daß mindestens eine Wärmerückführung (37, 63, 65), gegebenenfalls unter Zwischenschaltung eines Filters (35), vorgesehen ist, und daß insbesondere zwischen dem Röstapparat und dem Wirbelschichtapparat (8) eine Gasleitung für den Austausch von Gas und Wärmeenergie vorhanden ist, wobei vorzugsweise über diese Gasleitung Heißgas, insbesondere Heißluft, aus dem Wirbelschichtapparat dem Röstapparat, gegebenenfalls über eine Temperaturregel- und/oder Gasmischstufe, zuführbar ist.

12. Vorrichtung nach Anspruch 11, dadurch gekennzeichnet, daß in die Wärmerückführleitung (37) eine Heißgasleitung (65), besonders nach dem Filter (35), einmündet, und daß vorzugsweise die Heißgasleitung (65) ebenfalls von einer Wärmerückführleitung aus dem Röstapparat (60) gebildet ist, und daß in eine der Wärmerückführleitungen (37, 65) gegebenenfalls ein Wärmetauscher (33) geschaltet ist.

## Claims

1. A method of treating unshelled shellfruits, preferably beans or nuts, in particular cocoa beans, starting from a predetermined moisture content of the shellfruit followed by a heat treatment, characterised in that the shellfruit are first left with a moisture content of the shells from 10—50% by weight and with a moisture content of the kernels of from 2.5—8% by weight, or if necessary are treated to achieve this moisture content; and in that, through the subsequent heat treatment, the shells of the fruit are dried to a residual moisture content of 3 to 10% by weight and the kernels to a residual moisture content of 1—8% by weight.

2. A method in accordance with claim 1, characterised in that the heat treatment only lasts for 60—480 seconds and the temperature preferably amounts to at least 150°C, and in particular lies between 150°C and 220°C; and in that the heat treatment expediently takes place in a fluidised bed, in particular in hot air.

3. A method in accordance with claim 1 or claim 2, characterised in that a moistening treatment with water vapor or hot water for on average less than 180 seconds, preferably 10—60 seconds precedes the heat treatment, with the water vapor temperature amounting in particular to at least 120°C, preferably 120°C—150°C and the water temperature to 40°—90°C respectively, with a flavor corrector being optionally admixed to the latter.

4. A method in accordance with claims 1, 2 or 3, characterised in that the hot product is shelled after the heat treatment, in particular by impact shelling, and in that the shells are preferably subsequently removed.

5. A method in accordance with one of the claims 1 to 4, characterised in that the hot, and preferably shelled product is then roasted and in that at least a part of the hot gas, in particular hot air, from the heat treatment stage is expediently used to roast the product, and/or vice versa is supplied to the heat treatment stage from the roasting stage, optionally via a heat exchange stage.

6. A method in accordance with claim 5, characterised in that the hot gas has a temperature of 120°C—170°C.

7. A method in accordance with one of the claims 1 to 6, characterised in that the heat required for the heat treatment is generated by combustion, in particular of gas.

8. Apparatus for carrying out the method of one of the claims 2 to 7, characterised in that a fluidised bed apparatus (8) provided with a mechanical conveyor for uniform product forwarding, in particular a chain conveyor (13), is provided, preferably after a wetting apparatus (1), with the heating device associated with the fluidised bed apparatus (8) being laid out for a temperature of at least 150°C und with the output of the fluidised bed apparatus being connected to a shelling stage (22).

9. Apparatus in accordance with claim 8, characterised in that the shelling stage (22) is formed by an impact sheller (20) or a rubber roller sheller (20a).

10. Apparatus in accordance with claim 8 or claim 9, characterised in that a separating device (54) is connected to the shelling stage (20a) with the product being suppliable from its output, preferably to a roasting apparatus (60).

11. Apparatus in accordance with claim 8, 9 or 10, characterised in that at least one heat return path (37, 63, 65) is provided, optionally through the intermediary of a filter (35); and in that a gas duct for the exchange of gas and thermal energy is present, in particular between the roasting apparatus and the fluidised bed apparatus (8), with hot gas, in particular hot air, being suppliable, preferably via this gas duct, from the fluidised bed apparatus to the roasting apparatus, optionally via a temperature regulation and/or gas mixing stage.

12. Apparatus in accordance with claim 11, characterised in that a hot gas duct (65) opens into the heat return duct (37), in particular after the filter (35); in that the hot gas duct (65) is preferably likewise formed by a heat return duct from the roasting apparatus (60); and in that a heat exchanger (33) is optionally inserted into one of the heat return ducts (37, 65).

**Revendications**

1. Procédé pour traiter des fruits à coques non décortiqués, de préférence des fèves ou des noix et en particulier des fèves de cacao, à partir d'une humidité prédéterminée desdites fèves et avec un traitement thermique consécutif, caractérisé par le fait que les fruits à coques sont tout d'abord maintenus à une humidité de 10 à 50% en poids pour les coques et de 2,5 à 8% en poids pour les amandes, ou bien sont éventuellement traités pour atteindre cette humidité; et par le fait que, grâce au traitement thermique consécutif, les coques des fruits sont séchées jusqu'à une humidité résiduelle de 3 à 10% en poids pour les coques et de 1 à 8% en poids pour les amandes.

2. Procédé selon la revendication 1, caractérisé par le fait que le traitement thermique dure seulement de 60 à 480 s et la température est de préférence d'au moins 150°C et est en particulier comprise entre 150°C et 220°C; et par le fait que le traitement thermique a lieu judicieusement dans une couche tourbillonnaire, notamment dans de l'air chaud.

3. Procédé selon la revendication 1 ou 2, caractérisé par le fait que le traitement thermique est précédé d'un traitement à l'humidité à l'aide de vapeur d'eau ou d'eau chaude durant en moyenne moins de 180 s et de préférence de 10 à 60 s, la température de la vapeur d'eau étant en particulier d'au moins 120°C, de préférence de 120° à 150°C ou bien, respectivement, la température de l'eau chaude étant de 40° à 90°C, un correcteur de goût étant éventuellement ajouté à cette eau chaude.

4. Procédé selon la revendication 1, 2 ou 3, caractérisé par le fait que le produit chaud est décortiqué après le traitement thermique, notamment décortiqué par percussion, après quoi les coques sont de préférence immédiatement évacuées.

5. Procédé selon l'une des revendications 1 à 4, caractérisé par le fait que le produit chaud et de préférence décortiqué est ensuite torréfié; et par le fait que, en vue de la torréfaction, un gaz chaud, et en particulier de l'air chaud, est avantageusement, au moins en partie, délivré au produit à partir de l'étage de traitement thermique et/ou inversement vers cet étage de traitement thermique à partir de l'étage de torréfaction, éventuellement par l'intermédiaire d'un étage d'échange thermique.

6. Procédé selon la revendication 5, caractérisé par le fait que le gaz chaud présente une température de 120°C à 170°C.

7. Procédé selon l'une des revendications 1 à 6, caractérisé par le fait que la chaleur nécessaire au traitement thermique est engendrée par combustion, en particulier de gaz.

8. Dispositif pour la mise en oeuvre du procédé selon l'une des revendications 2 à 7, caractérisé par le fait qu'il est prévu, de préférence après un appareil de mouillage (1), un appareil (8) à couche tourbillonnaire qui est pourvu d'un convoyeur mécanique et notamment d'un convoyeur à chaîne (13) en vue de l'acheminement régulier du produit, le dispositif de chauffage associé à cet appareil à couche tourbillonnaire étant conçu pour une température d'au moins 150°C et la sortie dudit appareil étant raccordée à un étage de décorticage (22).

9. Dispositif selon la revendication 8, caractérisé par le fait que l'étage de décorticage (22) est formé par un décortiqueur à percussion (20) ou par un décortiqueur (20a) à cylindre en caoutchouc.

10. Dispositif selon la revendication 8 ou 9, caractérisé par le fait qu'un trieur (54) est raccordé à l'étage de décorticage (20a), le produit pouvant être acheminé de préférence vers un appareil de torréfaction (60) à partir de la sortie de ce trieur.

11. Dispositif selon la revendication 8, 9 ou 10, caractérisé par le fait qu'il est prévu au moins un recyclage de chaleur (37, 63, 65), éventuellement avec interposition d'un filtre (35); et par le fait qu'un conduit de gaz pour l'échange de gaz et d'énergie calorifique est intercalé en particulier entre l'appareil de torréfaction et l'appareil (8) à couche tourbillonnaire, un gaz chaud et en particulier de l'air chaud pouvant être délivré de préférence par l'intermédiaire de ce conduit de gaz à l'appareil de torréfaction, à partir de l'appareil à couche tourbillonnaire, éventuellement par l'intermédiaire d'un étage de régulation de température et/ou de mélange des gaz.

12. Dispositif selon la revendication 11, caractérisé par le fait qu'un conduit (65) de gaz chaud débouche en particulier après le filtre (35) dans le conduit (37) de recyclage de chaleur; par le fait que ce conduit (65) de gaz chaud est de préférence également formé par un conduit de recyclage de chaleur partant de l'appareil de torréfaction (60); et par le fait qu'un échangeur thermique (33) est éventuellement incorporé dans l'un des conduits (37, 65) de recyclage de chaleur.

Fig.1

Fig. 2

0 068 221